# EUROPEAN PATENT APPLICATION

(11) **EP 3 680 292 A2**
(43) Date of publication of application: **15.07.2020**
(21) Application number: 18854731.9
(22) Date of filing: 30.10.2018
(51) Int. Cl.: C08L 29/04, C08L 3/02, C08K 3/01, C08K 3/013, C08K 3/10, C08K 3/38, C08K 7/04, D04H 1/64, D04H 13/00

(54) **HEAT- AND SOUND-INSULATING MATERIAL MADE FROM A MINERAL FIBER BASED ON A NON-PHENOL FORMALDEHYDE BINDER**

(30) Priority: 06.09.2017 RU 2017131349
(71) Applicant: Nicol LLC, Moscow 129110 (RU)
(72) Inventor: ASSOROVA, Polina Viktorovna, Ryazan 390000 (RU); IVANOV, Sergey Petrovich, Moscow 109428 (RU)
(74) Representative: Ricker, Mathias
(86) International application number: PCT/RU2018/050133
(87) International publication number: WO 2019/050439

(57) **Abstract**

A heat- and sound-insulating material containing mineral fibers 0.5 to 10.0 microns in diameter and a binder obtained by curing an aqueous composition containing polyvinyl alcohol, modified starch and processing additives, as well as a combination of two dehydrating agents, wherein the main dehydrating agent is at least one substance selected from an organic titanium compound, an organic nickel compound, and a boron compound, and the supplemental dehydrating agent is at least one substance selected from silver salts, rhenium salts, zirconium salts and cerium salts. The invention also relates to a method for producing such material. The invention makes it possible to substantially increase the ease and environmental safety of the process of manufacturing articles from fibrous material based on a non-phenol formaldehyde binder, and to improve the characteristics of the finished product.

## Description

### Technical field

The present invention relates to the field of mineral fiber materials comprising a binder which is free from phenol and formaldehyde, which can be used in producing fibrous, thermal, and acoustical insulation products intended for various applications.

### Background

Mineral and rock wool is a fibrous material obtained from the melts of gabbro-basalt rocks as well as smelter slags and mixtures thereof.

Mineral wool is a known highly efficient material for use in thermal or acoustical insulation. Melting point of the fibers exceeds 1000°C, which allows using mineral wool products in a wide range of operating temperatures. A huge number of the material advantageous properties makes it one of the most popular insulation and soundproofing materials.

Mineral wool has unique properties such as a fire resistance, biological and chemical resistance to various aggressive substances, fungal resistance and rodent resistance. At the same time, mineral wool meets the current sanitary and hygienic standards and quality standards. In addition, mineral wool exhibits a volume and shape stability in any conditions; it has low thermal conductivity, high thermal resistance and high strength.

Mineral fiber products generally comprise mats, boards and roll products of glass fiber, mineral wool and rock wool, where the fibers are bonded together by a cured thermoset polymeric binder material.

The rough fibrous materials (webs, mats) used for the subsequent manufacturing of thermal and acoustic insulating products of various types using mechanical processing are generally produced by converting a melt of suitable raw materials to fibers in a conventional manner, for instance by a spinning cup process.

The melt fibers formed in the centrifuge are blown into a fiber deposition chamber and - while airborne and while still hot - are covered by a binder solution and randomly deposited as a primary mat onto a travelling moving conveyor. The fiber mat is then mechanically formed from a primary mat of a desired thickness and continuously fed to a polymerization chamber where heated air is blown through the mat to cure the binder and bond the mineral fibers together.

The resulting carpet blank (mat) is cooled off by cold-air sweeping and cut into finished products (boards) or rolled up.

The conventional binders for mineral fibers are phenol-formaldehyde resins. Since they are relatively cheap, they have a low viscosity and are capable to cure forming a hard polymer, thereby resulting in a final product with good physical and mechanical properties. However, the use of phenol-formaldehyde binders is becoming increasingly undesirable because of toxic chemicals (phenol and formaldehyde) that pollute the environment during their production and are emitted during their use.

Accordingly, the problem of producing mineral fiber products where the fibers are bonded with a binder free of phenol and formaldehyde (as well as other toxic substances) is relevant.

A number of formaldehyde free compositions (so-called non-phenol formaldehyde binders) have been developed for use as binders in the production of fiber products. The main disadvantage of these solutions is poor workability in their application, due to the incompatibility of the proposed non-phenol-formaldehyde binders with traditional phenol-formaldehyde resin. Thus long stoppages of the process equipment is required for cleaning and washing the lines when switching from the production of non-phenol-formaldehyde grades of thermal insulation products to traditional phenolic ones, which occurs in practice when using polyacrylic acid binders (which have a strongly acidic pH and are therefore poorly compatible with weakly basic phenol formaldehyde resin).

This disadvantage is partially overcome by the binders according to RU 2430124 (publ. 09/27/2011), where a composition for producing a fiber nonwoven material (in particular, of synthetic fiber - polyester, acrylic, nylon, polyamide, ceramic or fiberglass) and a method of impregnating the loose mass of fibers with a solution of a binder is disclosed. A curable aqueous composition for a nonwoven fabric binder is obtained by a method comprising combining the following components:
(a) a polymer containing hydroxyl groups, which is a combination of polyvinyl alcohol and at least one component selected from the group consisting of starch, modified starch and sugar;
(b) at least one multifunctional crosslinking agent selected from the group consisting of non-polymeric polyacid, its salts, anhydride and non-polymeric polyaldehyde, wherein if the multifunctional crosslinking agent is the non-polymeric polyaldehyde, the composition additionally comprises (c) a catalyst.

Weight ratio of components (a):(b) ranges from 95:5 to about 35:65, and a pH of the curable composition is increased to at least 1.25 by adding nitrogen containing base.

In the process according to the patent RU 2430124, the non-polymeric polyaldehyde is a blocked glyoxal or a blocked glutaraldehyde, which is blocked by a blocking agent, which is at least one agent selected from the group consisting of urea, ethylene urea, sorbitol and ethylene glycol.

This method is applicable for a nonwoven fabric, but exhibits insufficient water resistance for mineral wool products. Furthermore, the use in the fiber production significant amounts of a multifunctional cross-linking chemical agent (such as maleic anhydride, glyoxal or glutaraldehyde) does not allow declaring the absolute environmental safety of such production process and the resulting fibrous thermal insulating products obtained from this fiber.

In the patent application publication US 2013/0023174 A1 (publ. 01/24/2013) titled BINDER COMPOSITIONS WITH POLYVALENT PHOSPHORUS CROSSLINKING AGENTS a fibrous insulation product is described that includes a binder comprising a polyol and a phosphorus crosslinking agent derived from a phosphonic or phosphoric acid, salt, ester or anhydride to form crosslinked phosphodiester linkages. The polyol and the crosslinking agent form a polyester thermosetting resin, more particular a phosphodiester crosslinked resin.

In this disclosure, significant amounts of phosphorous crosslinking agents are used in the crosslinking of polyols. The disadvantages of this method are:
1. Insufficient moisture resistance of the obtained binder, since phosphodiester compounds form gels upon moistening.
2. When recycling fibrous materials excessed amounts of phosphorus oxide emissions are possible.

As the closest analogue (prototype) a thermal and acoustic insulating material on non-phenol formaldehyde binder was selected, that is disclosed in RU 2588239 (publ. 27.06.2016).

According to this document, the heat-insulation and sound-insulating material contains mineral fibres, binding agent and nano- or microparticles. Binding agent is produced by hardening aqueous composition containing polyvinyl alcohol, modified starch, crosslinking agent, catalyst, silane, dust-removing oil and water repellent. Nano- or microparticles are made of at least one material selected from a group comprising graphite, fullerenes, carbon nanotubes, clay, particles of metals and their alloys, carbides and oxides, silicon dioxide microparticles (microspheres) or any combination of the above objects, or any combination thereof. Nano- or microparticles are used to create a denser network of cross-linkings, resulting from interaction of polycondensation or polymerization centers, various reactive functional groups of the binder, which provides better curing of the components of the binder.

This method has the advantages and allows you to get a reasonably good product, but nevertheless exhibits certain disadvantages: preparation of the binder, according to the described technology, is complicated due to the need for continuous thorough mixing of the powder of insoluble micro- and nanoparticles in the mass of liquid binder and ensuring a stable distribution of the suspension of solid particles in an aqueous solution of its components. In addition, due to low bulk density, loading the binder composition with some nanoparticles may constitute a technological problem.

The nano- and microparticles tendency to spontaneous agglomeration and sedimentation causes their uneven distribution in the binder, thus, there is a risk of heterogeneity of the of the resulting insulating material. In addition, some types of particles cause rapid, within 4-6 hours, abrasion of centrifuge nozzles due to friction, and therefore the supply of the binder to the fibers becomes unstable. In this case, the spraying uniformity of the binder is negatively affected; the binder is unevenly distributed on the fiber. In this regard, consumption of binder is to be increased for eliminating the uneven bonding of the fibers in the products, which leads to an increase in the flammability of the finished product. Therefore, after 4 hours of work, it is necessary to stop production to replace centrifuge nozzles.

Dehydration of polyvinyl alcohol is a challenging process, therefore the binder according to the patent RU 2588239 requires high drying and curing temperatures - not less than 260°C. This results in binder losses in the polymerization chamber in amount of about 30-40% on dry weight basis, caused by partial destruction of the initial components.

Therefore, improving the processability of the mineral fibers preparation method based on non-phenol formaldehyde binder and respective products is an object of great relevance. Furthermore, there is a need to provide improved environmental safety of the technological process and enhanced quality of the finished products, in particular to ensure water resistance not lower than with the phenol-formaldehyde binder.

### Summary

The solution to the problem is reducing the curing temperature of the binder components, as well as facilitating dehydration and decreasing polycondensation temperature.

There has been developed such a thermal and sound insulating material that comprises mineral fibers with a diameter of 0.5 to 10.0 microns and a binder composition comprising a nontoxic polymeric component that bounds these fibers and is capable to pass to non-melting and insoluble state due to the process of its autonomous catalytic thermo dehydration, intermolecular and intramolecular crosslinking. The polymer component contains polyvinyl alcohol and modified starch as the main constituents and is cured from the aqueous composition. The binder also contains processing additives, which are common in the production of thermal and sound insulating fiber materials, such as silane, dust-removing oils, water repellent.

In addition, in order to facilitate dehydration and decrease curing temperatures, the binder contains a catalytic system, which represents a combination of two different dehydrating agents. This contributes to the process of dehydration lasting the sufficient time for the carpet blank (mat) to pass through the polymerization chamber (4-10 minutes, at curing temperatures of up to 225°C). This allows to avoid the use of any additional special chemical cross-linking agents (which are involved in the intermolecular chemical reaction with hydroxyl-containing components of the binder) in the process, which ensures a significantly greater level of environmental friendliness of the products obtained.

The catalytic system comprises two dehydrating agents - a main agent (in major amounts) and a supplemental agent (in minor amounts). These dehydrating agents that are used for mixing are selected from the following substances:
Group 1 (main dehydrating agent):
   - organic titanium compounds (preferably tetrabutoxytitanium);
   - organic nickel compounds (preferably nickel formiate);
   - boron compounds (preferably sodium tetraborate).
Group 2 (supplemental dehydrating agent):
   - inorganic silver salts (preferably: silver oxalate and / or silver nitrate);
   - inorganic rhenium salts (preferably rhenium chloride);
   - inorganic zirconium salts (preferably zirconium carbonate);
   - inorganic cerium salts (preferably cerium sulfate).

It is possible to simultaneously use several different dehydrating agents, represented in the above groups, in the catalytic system in any combination within each of the groups.

Distribution of the dehydrating agents in the groups is based on the fact that the main dehydrating agent is used in the process in substantially larger amounts (in the range from 0.005 wt.% to 0.02 wt.% calculated for finished product) than the supplemental dehydrating agent (in the range from 0.0007 wt.% to 0.0017 wt.%, calculated for finished product). Thus, the mass ratio of the main to the supplemental dehydrating agents is approximately from 7 to 29. With a larger ratio, there is an unjustified overrun of the dehydrating agent, and with a larger proportion of the supplemental dehydrating agent, the cost of the composition increases significantly without essential gain in the properties of the finished product and technological conditions.

The combined dehydrating system, which is contained in very small amounts in the finished products (no more than 0.022% by weight of the finished product) and does not pose a threat to environmental safety when used, nevertheless provides the required effect of crosslinking, functioning in a binder as a dehydration enhancer of the polyvinyl alcohol macromolecules and modified starch. As a result of the process of enhanced thermodehydration initiated by this system, intramolecular and intermolecular crosslinking of polyvinyl alcohol macromolecules and modified starch occurs due to the interaction of OH groups of the polymer matrix with the release of low-molecular reaction products (primarily water).

As a result of this chemical transformation, the binder film, which binds together the individual fibers of the thermal-insulating material, becomes durable and water-insoluble, which provides the necessary set of strength, compressibility and water resistance consumer properties of the resulting products.

Catalytic dehydration of polyvinyl alcohol using a variety of dehydrating agents have been known in the prior art, however, it was unexpectedly discovered that a combination of two dehydrating agents according to the invention taken in a selected proportion (the main agent in major amounts of and the supplemental agent in minor amounts) allows reducing temperature and duration of the curing process significantly. It became possible to use catalytic dehydration for a binder containing polyvinyl alcohol and modified starch as a result. This can be considered an environmentally friendly binder for mineral fibers.

When a single catalytic agent is used (from the group of "main" agents) in the ranges of curing temperatures suitable for the operating conditions, a sufficient degree of curing is not achieved to provide the required properties of the finished product, the most important property being the required water resistance grade.

The use of a combination of the dehydrating agents allows reducing the process temperature with the same time of passing the polymerization chamber from 260° C (without supplemental dehydrating agents) or 245° C (with a single main dehydrating agent) to a range from 207° C to 225° C (when using a combination of main and supplemental dehydrating agents), which is technologically very advantageous in terms of energy savings.

The finished material contains: 92.0 to 98.0 wt. % of the mineral fibers and 0.95 to 7.00 wt. % of the binder (including - polyvinyl alcohol in amount from 0.72 to 4.00 wt.%, modified starch in amount from 0.01 to 3.00 wt.%, and in addition - processing additives: silane, dust-removing oils, water repellent) and the combination of the dehydrating agents in amount from 0.007 to 0.02 2 wt. %

After curing the binder, the material contains up to 7.0 wt% of the cured polymer, more preferably - from 0.95 to 4.3 wt% of the cured polymer.

In another aspect of the invention, a method for producing a heat and sound insulating material according to claim 1 is provided, wherein the melt-formed mineral or glass fiber is fed to the centrifuge simultaneously with a phenol and formaldehyde-free binder composition containing polyvinyl alcohol, modified starch, processing additives and a combination of two dehydrating agents, wherein at least one main dehydrating agent is selected from the group comprising an organic titanium compound, organic nickel compound and a boron compound, and at least one supplemental dehydrating agent is selected from the group comprising silver salt, rhenium salt, zirconium salt and a cerium salt; thereafter the obtained carpet blank is shaped to the desired thickness and subjected to heat treatment.

Processing additives include silane, dust-removing oil and water-repellent emulsion.

The composition of the binder is mixed on the mineral wool products manufacture site immediately before it is applied to the fiber, by successively mixing all the components. For this purpose, the aqueous solutions of polyvinyl alcohol and modified starch are mixed first, then the processing additives are introduced to the solution followed by adding the combination of the dehydrating agents. The binder composition may be loaded with the dehydrating agents either in the solid form, or in the form of a solution or suspension in a suitable solvent.

Heat treatment of carpet blanks of fibrous material is carried out at a temperature of 220 -230° C for a time sufficient to dry it and to complete the process of curing the binder, preferably for 4-10 minutes.

During the heat treatment, hot air is purged through the carpet blanks, and after the heat treatment the carpet blanks are cooled down by drawing the cold air.

The amount of the binder components is calculated taking into account the loss of mineral fibers during the fiber formation and the binder is fed to the centrifuge with an excess of 18%.

The resulting carpet blanks are cut into boards, or rolled up to obtain the finished products.

The proposed method does not require modification of the existing technology used for manufacturing the products from mineral fiber since conventional mineral fibers are used with a diameter of 0.5 to 10.0 µm, and having any suitable chemical composition - basalt, glass or slag. The density of the resulting fibrous material may vary from 10 to 185 kg/m³ (preferably from 25 to 120 kg/m³), which also meets the requirements for such products.

### Detailed description

Heat and sound insulation fibrous products of the present invention were obtained by applying a phenol and formaldehyde-free binder to a melt-formed mineral or glass (slag) fiber. The resulting primary mat was then formed to the desired thickness of the carpet blank (mat) fibrous material and heat treated to cure the binder composition to obtain an infusible and insoluble polymer which binds individual fibers together forming a solid fibrous product.

Heat treatment of carpet blanks (mat) of fibrous material is performed at an average temperature of 225° C for a time sufficient to its drying and completing the binder curing process (4-10 minutes).

After the binder is cured the final product contains up to 7.0 wt.% of the cured polymer, more preferably from 0.95 to 4.3 wt.% of the cured polymer, wherein the weight percentages are calculated based on the amount of fiber and cured polymer.

The carpet blank (mat) thus obtained cooled by drawing cold air and cut to the finished products (boards) or wound into the roll product.

The following non-limiting examples of the implementation of this invention are given for illustration purposes to demonstrate achievement of the desired effect in various embodiments of the invention.

### EXAMPLES

A solution of modified starch (component A) was prepared by dissolving 30 kg of starch or modified starch in 70 liters of demineralized water.

A solution of polyvinyl alcohol (component B) was prepared by dissolving 30 kg of polyvinyl alcohol in 70 1 of demineralized water.

Then the components were mixed, the processing additives were added according to the formulation, and the binder thus obtained was diluted with water to a concentration of 9%, prior to feeding to the centrifuge.

### Example 1. Production of heat insulation products with an average density (35-45 kg/m³).

The components (based on one ton of the finished product) listed in table 1 were mixed in the following order:
- component A - 47 kg,
- component B - 47 kg,
- water - 331 1,
- dust remover Pentamix 842 - 10.7 kg,
- water repellent Silres BS 5136 - 10.2 kg,
- silane Silquest A 1524 - 0.63 kg
- dehydrating agent of Group 1 - 0, 1 kg; and
- dehydrating agent of Group 2 - 0, 02 kg.

The resulting binder is continuously fed to the centrifuge simultaneously with the melt, to cover the fiber by the composition. A primary mat was formed from the fiber covered by the binder, the mat then dried and cured in a polymerization chamber at a temperature of 220-230°C, with hot air being purged through the mineral wool carpet. Then the carpet was cooled by drawing cold air there through and cut into the finished products.

The amounts of the components are given per ton of the finished product, including the loss of mineral fiber during fiber formation in the amount of 17%; thus the binder composition was fed to the centrifuge in excess of 18%.

**Table 1**

| | Composition of the binder: kg per 1 ton of finished products | % supply of dry residue per ton of finished products, including 18% loss | % of the component per 1 ton of finished products |
|---|---|---|---|
| Component A | 47 | 1.42 | 1.2 |
| Component B | 47 | 1.42 | 1.2 |
| Water | 219.4 | | - |
| Dust remover Pentamix 842 | 10.7 | 0.535 | 0.454 |
| Water-repellent Silres BS 5136 | 10.2 | 0.51 | 0.435 |
| Silane Silquest A 1524 | 0.63 | 0.063 | 0.053 |
| Dehydrating agent of Group 1 | 0.1 | 0.01 1 | 0.01 |
| **Nickel formate** | | | |
| Dehydrating agent of Group 2 | 0.020 | 0,002 | 0,0017 |
| **Silver oxalate** | | | |
| Total binder and additives | 446,65 | 3.96 | 3.354 |
| Mineral fiber (basalt) | | | 96,646 |
| Total | | | 100 |

### Example 2. Production of heat-insulation products with low density (25-35 kg/m³).

This Example differs from the Example 1 by the reduced load for mixing the binder components listed in table 2, namely:
- component A - 13.2 kg,
- component B - 56,4 kg,
- water- 162.4 1,

**Table 2.**

| | Composition of the binder: kg per 1 ton of finished products | % supply of dry residue per ton of finished products, including 18% loss | % of the dry residue per 1 ton of finished products |
|---|---|---|---|
| Component A | 13.2 | 0,4 | 0,33 |
| Component B | 56,4 | 1.7 | 1.44 |
| Water | 162.4 | | - |
| Dust remover Pentamix 842 | 2.35 | 0,34 | 0,1113 |
| Water-repellent Silres BS 5136 | 2.35 | 0,23 | 0,1 |
| Silane - Silquest A 1524 | 0.12 | 0.012 | 0.01 |
| Dehydrating agent of Group 1 | | | |
| **Sodium tetraborate** | 0.08 | 0,008 | 0,007 |
| Dehydrating agent of Group 2 | | | |
| **Rhenium chloride** | 0.020 | 0,002 | 0,0017 |
| Total binder and additives | 197.32 | 100 | 2 |
| Mineral fiber (basalt) | | | 98 |
| Total | | | 100 |

### Example 3. Production of heat-insulation products with high density (more than 100 kg/m³), using a combination of two dehydrating agents from the Group 2.

This example differs from the Example 1 by the increased load of the binder components listed in table 3, for mixing, namely:
- component A - 70.2 kg,
- component B - 157.7 kg,
- water- 551,8 1,

**Table 3.**

| | Composition of the binder: kg per 1 ton of finished products | % supply of dry residue per ton of finished products, including 18% loss | % of the dry residue per 1 ton of finished products |
|---|---|---|---|
| Component A | 70.2 | 2.12 | 1.8 |
| Component B | 157.7 | 4.73 | 4.0 |
| Water | 551.8 | | |
| Dust remover Pentamix 842 | 10.2 | 0.51 | 0.5 |
| Water-repellent - Silres BS 5136 | 10.2 | 0.51 | 0.5 |
| Siiane - Silquest A 1524 | 2.36 | 0.236 | 0.2 |
| Dehydrating agent of Group 1 | 0.24 | 0.024 | 0.02 |
| **Tetrabutoxytitanium** | | | |
| Dehydrating agent of Group 2 | | | |
| **Zirconium carbonate** | 0,010 | 0.001 | 0,00085 |
| **Cerium sulfate** | 0,010 | 0.001 | 0,00085 |
| Total binder and additives | 802.72 | | 7.0 |
| Mineral fiber (basalt) | | | 93 |
| Total | | | 100 |

### Example 4. Production of insulation products with an average density (80-90 kg/m³).

**Table 4**

| | Composition of the binder: kg per 1 ton of finished products | % supply of dry residue per ton of finished products, including 18% loss | % of the component per 1 ton of finished products |
|---|---|---|---|
| Component A (main substance content - 30%) | 47 | 1.42 | 1.2 |
| Component B (main substance content - 30%) | 47 | 1.42 | 1.2 |
| Water | 219 | | - |
| Dust remover Pentamix 842 | 10.7 | 0.535 | 0.454 |
| Water-repellent Silres BS 5136 | 10.2 | 0.51 | 0.435 |
| Silane - Silquest A 1524 | 0.63 | 0.063 | 0.053 |
| Dehydrating Agent of Group 1 **Tetrabutoxytitanium** | 0.1 | 0.01 | 0.1 |
| Dehydrating Agent of Group 2 | | | |
| **Silver oxalate** | 0.020 | 0,002 | 0,0017 |
| Total binder and additives | 334.83 | 100 | 3,444 |
| Mineral fiber (basalt) | | | 96,556 |
| Total | | | 100 |

### Example 5. Production of heat-insulating products with high density (more than 100 kg/m³) using the dehydrating agent from the Group 1 only, without any additional dehydrating agents from the Group 2.

**Table 5**

| | Composition of the binder: kg per 1 ton of finished products | % supply of dry residue per ton of finished products, including 18% loss | % of the component per 1 ton of finished products |
|---|---|---|---|
| Component A (main substance content - 30%) | 70.2 | 2.12 | 1.8 |
| Component B (main substance content - 30%) | 157.7 | 4.73 | 4.0 |
| Water | 531.8 | 91.87 | - |
| Dust remover Pentamix 842 | 10.2 | 0.51 | 0.5 |
| Water-repellent Silres BS 5136 | 10.2 | 0.51 | 0.5 |
| Silane - SilquestA 1524 | 2.36 | 0.236 | 0.2 |
| Dehydrating Agent of Group 1 | | | |
| **Nickel formate** | 0.26 | 0.024 | 0.0217 |
| Total binder and additives | 782.72 | 100 | 7.0 |
| Mineral fiber (basalt) | | | 93 |
| Total | | | 100 |

### Example 6. Production of heat-insulating products made of fiberglass with a density of 11 - 46 kg/m³.

This Example differs from the Examples 1-5 for the basalt fiber with a higher binder content of up to 7%.

Binder component loading :
- component A - 50 kg,
- component B - 37.5 kg,
- water - 204 1,

**Table 6.**

| | Composition of the binder: kg per 1 ton of finished products | % supply of dry residue per ton of finished products, including 18% loss | % of the component dry residue per 1 ton of finished products |
|---|---|---|---|
| Component A (main substance content - 30%) | 37.5 | 3.54 | 3 |
| Component B (main substance content - 30%) | 50 | 4.72 | 4 |
| Water | 204 | | - |
| Dust remover Pentamix 842 | 2.35 | 0,67 | 0.57 |
| Water-repellent Silres BS 5136 | 2.35 | 0,45 | 0,38 |
| Silane - SilquestA 1524 | 0,32 | 0.032 | 0.03 |
| Dehydrating agent of Group 1 | | | |
| **Sodium tetraborate** | 0.08 | 0.024 | 0.0184 |
| Dehydrating agent of Group 2 | | | |
| **Rhenium chloride** | 0.020 | 0.00187 | 0.0016 |
| Total binder and additives | 296.62 | 9.44 | 8 |
| Glass fiber | | | 92 |
| Total | | | 100 |

### Example 7. Producing heat-insulating products from slag wool with a density of more than100 kg /m³.

This Example differs from the Example 3 with the reduced load of component A to ensure the tactile softness of the heat-insulating boards.
- component A - 39.4 kg,
- component B - 157.7 kg,
- water - 459 1

**Table 7.**

| | Composition of the binder: kg per 1 ton of finished products | % supply of the dry residue per ton of finished products, including 18% loss | % of the component dry residue per 1 ton of finished products |
|---|---|---|---|
| Component A | 39.4 | 1.18 | 1,0 |
| Component B | 157.7 | 4.73 | 4.0 |
| Water | 459 | | |
| Dust remover Pentamix 842 | 10.2 | 0.51 | 0.5 |
| Water-repellent Silres BS 5136 | 10.2 | 0.51 | 0.5 |
| Siiane - Silquest A 1524 | 2.36 | 0.236 | 0.2 |
| Dehydrating agent of Group 1 | | | |
| **Nickel formate** | 0.24 | 0.024 | 0.02 |
| Dehydrating agent of Group 2 | | | |
| **Rhenium chloride** | 0,010 | 0.001 | 0,00085 |
| **Cerium sulfate** | 0,010 | 0.001 | 0,00085 |
| Total binder and additives | 679.3 | | 5.22 |
| Mineral fiber (slag) | | | 94,785 |
| Total | | | 100 |

Curing the products with the compositions according to the Examples 1-4 in the polymerization chamber required a temperature of 210 to 230°C to ensure water absorbability of up to 1 kg/m², and for the product according to the composition of the Example 5 without any additional dehydrating agents of group 2, the temperature of 245°C was required to provide the same water absorbability.

The resulting products, heat and sound insulating fiber plates, have the properties shown in Table 8.

**Table 8.**

| Characteristics | Example 1 | Example 2 | Example 3 | Example 4 | Example 5 | Example 6 | Example 7 |
|---|---|---|---|---|---|---|---|
| Density, kg/m³ | 38 (± 4) | 30 (±4) | 110(± 5) | 80-90 | 110(±5) | 14 | 125 |
| Heat-transfer capacity at 25°C, W/(m^{∗}K) up to | 0.039 | 0.039 | 0.038 | 0.038 | 0.038 | 0.042 | 0.039 |
| Compressibility, %), up to | 30.0 | 30.0 | - | 30 | - | - | - |
| Compression strength at 10% deformation, kPa, up to | - | - | 20 | - | 17 | - | 21 |
| Organic content, wt.%, up to | 2.5 | 1.0 | 7.0 | 2.5 | 7.0 | 8 | 5.22 |
| Water absorbability at short time and partial immersion, kg/m², up to | 1.0 | 1,0 | 1.0 | 1.0 | 1.0 | 2 | 1.5 |
| Humidity, wt. %, up to | 0.5 | 0.5 | 0.5 | 0.5 | 0.5 | 0.5 | 0.5 |

The above experimental data demonstrate that when manufacturing the fiber heat and sound insulation products, in particular, the boards, it is possible to obtain a product that has the required consumer properties and characteristics.

These parameters provide a satisfactory degree of binder crosslinking, its water absorbability, strength and rigidity. Thus, in terms of physico-mechanical and heat-performance characteristics, as well as by water absorbability, the resulting product is highly competitive with the material produced with the conventional phenol-formaldehyde resins, and/or according to the methods of producing fibrous products with the non-phenol-formaldehyde binders known in the state of the art, but the product of the present invention exhibits greater environmental safety as at the production stage, and in use.

The present invention provides for significant improvements of the processability of the manufacturing process for the fibrous material products with a non-phenoformaldehyde binder, eliminates the drawbacks of previously used and proposed methods, in particular, allows to avoid using nano-and microparticles eliminates the need for their thorough distribution in the bulk liquid binder. At the same time, the proposed technology retains main advantages of the conventional methods such as good compatibility with phenolformaldehyde binders (which simplifies transition from one brand of fibrous insulation products to another), and low toxicity of the main chemical components used (polyvinyl alcohol and modified starch), which allows producing the heat and sound insulation products that are more safe.

## Claims

1. Heat and sound insulating material, comprising:
mineral fibers 0.5 to 10.0 microns in diameter; and
a binder obtained by curing an aqueous composition, the composition comprising polyvinyl alcohol, modified starch and processing additives, and the composition further comprising a combination of an at least one main dehydrating agent and an at least one supplemental dehydrating agent, wherein the at least one main dehydrating agent is selected from an organic titanium compound, an organic nickel compound and a boron compound, and wherein the at least one supplemental dehydrating agent is selected from silver salts, rhenium salts, zirconium salts and cerium salts.

2. The heat and sound insulating material according to claim 1, wherein the main dehydrating agent is tetrabutoxytitanium.

3. The heat and sound insulating material according to claim 1, wherein the main dehydrating agent is nickel formate.

4. The heat and sound insulating material according to claim 1, wherein the main dehydrating agent is a sodium tetraborate.

5. The heat and sound insulating material according to any one of claims 2 to 4, wherein the supplemental dehydrating agent is silver oxalate or silver nitrate.

6. The material according to any one of claims 2 to 4, wherein the supplemental dehydrating agent is rhenium chloride.

7. The material according to any one of claims 2 to 4, wherein the supplemental dehydrating agent is zirconium carbonate.

8. The material according to any one of claims 2 to 4, wherein the supplemental dehydrating agents is cerium sulfate.

9. The material according to claim 1, wherein the processing additives include a silane, a dust removing oil and a water-repellent emulsion.

10. The material of claim 1, comprising the following amounts of the said components:
92.0 to 98.0 wt. % of the mineral fibers;
0.95 to 7.00 wt. % of the binder, wherein the binder comprises:
0.72 to 4.00 wt.% of polyvinyl alcohol;
0.01 to 3.00 wt.% of modified starch;
from 0,007 to 0,022 wt. % combination of the two dehydrating agents.

11. The material according to claim 1, wherein the ratio of the main dehydrating agent to the supplemental dehydrating agent is about from 7 to 29.

12. The material according to claim 10, wherein after curing the binder the material comprises up to 7.0 wt.% of the cured polymer, more preferably 0.95 to 4.3 wt.% of the cured polymer.

13. The material according to claim 10, wherein the material comprises up to 0.022 wt.% of the two dehydrating agents based on the weight of the finished product.

14. A method for producing a heat and sound insulating material according to claim 1, comprising feeding a melt-formed mineral or glass fiber to a centrifuge simultaneously with a phenol- and formaldehyde-free binder composition to obtain a fiber carpet blank, the binder composition comprising polyvinyl alcohol, modified starch, processing additives and a combination of two dehydrating agents, wherein an at least one main dehydrating agent is selected from the group comprising an organic titanium compound, an organic nickel compound and a boron compound, and an at least one supplemental dehydrating agent is selected from the group comprising a silver salt, a rhenium salt, a zirconium salt and a cerium salt; then forming a fiber carpet blank to the desired thickness followed by heat treating the formed fiber carpet blank.

15. The method according to claim 14, wherein the processing additives include silane, dust removing oil and water-repellent emulsion.

16. The method according to claim 14, wherein the mixing of the binder composition is performed at the manufacturing site of mineral wool products immediately before application of the binder to the fiber, wherein the mixing comprises successive mixing of all the binder components.

17. The method according to claim 16, wherein for obtaining the binder composition the aqueous solutions of polyvinyl alcohol and modified starch are mixed, then the processing additives are added, followed by adding the combination of dehydrating agents.

18. The method according to claim 17, wherein the combination of dehydrating agents is introduced into the binder composition either in the solid form, or in the form of a solution or a suspension in a suitable solvent.

19. The method according to claim 14, wherein the fiber carpet blank is heat treated at a temperature of 220 - 230°C during a time period sufficient for drying the fiber carpet blank and for completing the binder curing process, preferably during 4-10 minutes.

20. The method according to claim 19, wherein hot air is purged through the fiber carpet blank during the heat treatment.

21. The method according to claim 19, wherein the carpet blank is cooled down by drawing cold air through the fiber carpet blank after the heat treatment.

22. The method according to claim 14, wherein the amount of the binder components is calculated taking into account the loss of mineral fiber during fiber formation and the binder composition is fed to the centrifuge with an excess of 18%.

23. The method according to claim 14, wherein the resulting fiber carpet blank is either cut into the boards, or rolled up to obtain the finished products.
